# EUROPEAN PATENT APPLICATION

(11) **EP 1 637 279 A1**
(43) Date of publication of application: **22.03.2006**
(21) Application number: 05012407.2
(22) Date of filing: 10.09.2004
(51) Int. Cl.: B23Q 7/04, B23Q 3/155, B25B 5/08, B23B 31/16

(54) **Machining apparatus with a gripping-tool on the machining head**

(62) Divisional of application: 04425676.6
(71) Applicant: VIGEL S.p.A., I-10071 Borgaro Torinese (Torino) (IT)
(72) Inventor: Martinis, Marco, 10137 Torino (IT)
(74) Representative: Spandonari, Carlo

(57) **Abstract**

The apparatus comprises a bedplate (12), a working table and a machining head (14) which are supported on the bedplate in mutually slidable relation along at least one horizontal direction (X, Y) and one vertical direction (Z), and at least one motorized spindle (16, 18) supported on the machining head (14). A gripping tool (24, 26) is provided with at least one gripper (28, 30) operated for opening/closing by driving means (36, 38), and is adapted to be driven by the machining head (14) to cyclically convey workpieces (P1, P2 and P3, P4) from a loading area to the working table, and from the working table to an unloading area.

## Description

The present invention relates to a workpiece-machining apparatus.

As well known, manufacture of mechanical pieces generally starts from a workpiece cast in iron or aluminum, which undergoes a set of operations such as milling, facing, boring, tapping, and the like, along different axes.

Prior European document EP 1 222 027 A1 discloses a machine which is particularly suitable for machining caliper blocks or brackets of disk brakes, and by which the above-cited operations are quite flexibly performed in a single cycle. Such machine is provided with a movable machining head driven by numerical control and supporting a plurality of tool-holding spindles for simultaneously machining a plurality of workpieces.

The workpieces to be loaded/unloaded are supported on a workpiece-holding drum that is pivotally supported on the machine about a horizontal axis. While the machining head performs predetermined operations upon the pieces housed in a portion of the drum which is accessible by the spindles, the operator loads new pieces, which are to be machined in the following cycle, on the opposite portion of the drum, outside the machining area.

Although the use of such manual loading/unloading system reduces the machine downtime, the latter still weighs heavily on the cycle time of the machine. Thus, for a higher production, automated loading/unloading systems have been tested, where a plurality of machines are served, e.g., by a dedicated robot or by a truck running on rails.

However, such automated loading/unloading systems in the machining plants are bulky as well as very expensive to install. Moreover, such systems also reduce the flexibility of the plant, because they rigidly bind the layout of the machines in relation to the arrangement of the loading/unloading apparatus.

Such systems also are a hindrance for the operators engaged, e.g., in maintenance and tool-changing operations, mainly in consideration of the safety measures to be implemented whenever such systems are used.

Therefore, a main object of the present invention is to provide a workpiece-machining apparatus provided with a workpiece-loading/unloading system capable of reducing the machine downtimes with respect to the known machines such as the above-mentioned ones, without reducing the flexibility and the ease of access to the machine by operators.

Said object and other aims and advantages that will better appear from the following description, are achieved by an apparatus having the features recited in claim 1, while the other claims state other advantageous, unessential features of the invention.

The invention will be now described in more detail with reference to a preferred, non-exclusive embodiment shown by way of non limiting example in the attached drawings, wherein:
Fig. 1 is a plan view of the apparatus according to the invention,
Fig. 2 is a front view of the apparatus of Fig. 1,
Fig. 3 is a side view of the apparatus of Fig. 1,
Fig. 4 is a diagrammatical front view to an enlarged scale of a detail of the apparatus of Fig. 1,
Fig. 5 is a side view of the detail of Fig. 4,
Fig. 6 is a front view of an alternative embodiment of the apparatus according to the invention,
Fig. 7 is a side view of the apparatus of Fig. 6.

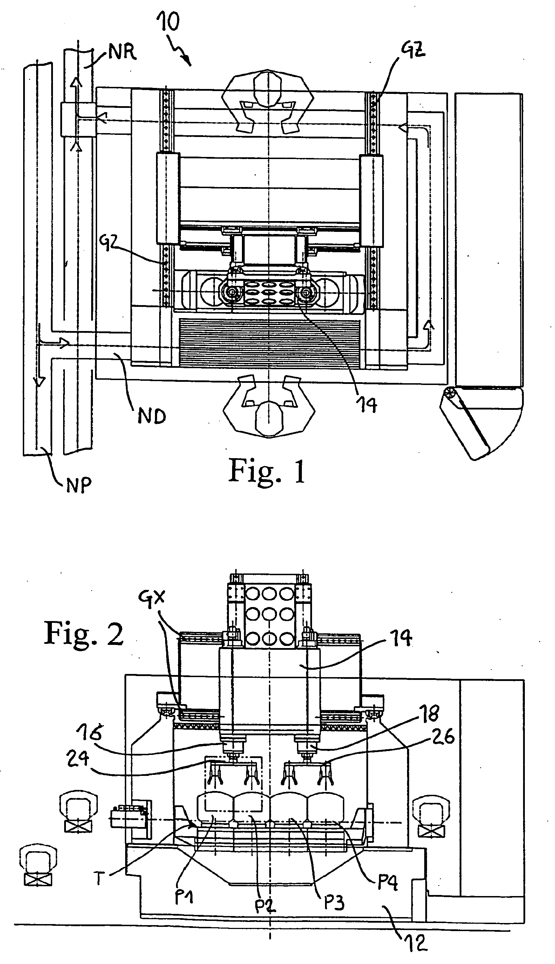

With initial reference to Figs. 1-3, a workpiece-machining apparatus 10 comprises a bedplate 12 supporting a machining head 14 that is slidable on guides GX, GY and GZ along two horizontal directions at right angle to each other, as well as a vertical direction respectively. The machining head is operated along said guides by driving means (not shown) which are preferably controlled by numerical control.

Machining head 14 supports two motorized spindles 16, 18 equipped for automatically clamping machining tools such as 20. Tools 20 are different in relation to the operation to be performed upon the workpiece under processing, such as milling, facing, boring, tapping, and the like.

In a known way, the machining tools are stored in a tool-holding drum 22 which is pivotally supported on bedplate 12 about a horizontal axis. The drum is driven by driving means (not shown) to selectively bring a set of tools to a picking position where they are to be directly clamped by spindles 16, 18.

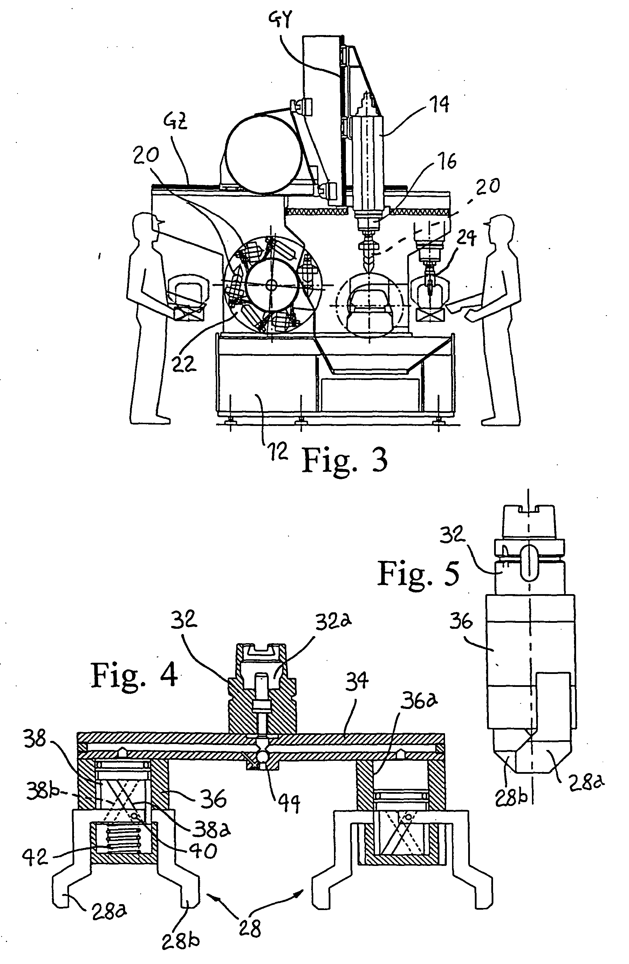

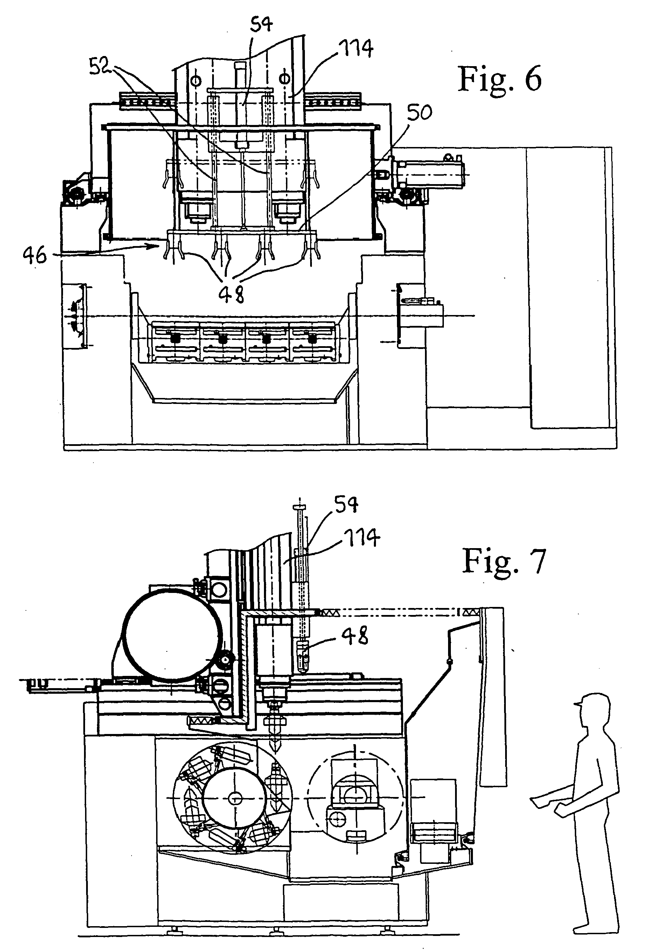

As shown in more detail in Figs. 4, 5, the apparatus according to the invention is provided with a pair of gripping tools 24, 26. Each gripping tool is to be mounted on a respective spindle in a similar way to the machining tools, and is provided with a couple of grippers 28, 30 which are operated by driving means to grip two respective pieces P1, P2 and P3, P4 from a conveyor belt ND and to convey them on a piece-holding table T below the operating area of the spindles, as will be better disclosed below.

Gripping tools 24, 26, when disconnected from their respective spindles, are preferably stored in a seat of the tool-holding drum where they cannot interfere with the machining area, though a different resting seat could be chosen of course.

Each gripping tool is provided with a tang 32 that is suitably shaped to be clamped by the spindle in a similar way to the machining tools. Tang 32 rises at right angle from a hollow rod 34 at whose ends are supported said grippers 28.

Each gripper is provided with a pair of jaws 28a, 28b which are operated for mutually opening/closing by a hydraulic cylinder 36 housing a slidable piston 38. Two sloping grooves 38a, 38b are made on respective opposite sides of the piston skirt. Each groove is slidably engaged by a tooth 40 of a respective jaw for changing the axial motion of the piston 38 into a radial opening/closing motion of the jaws. The piston is elastically forced by a spring 42 to its upper position corresponding to a closed arrangement of the jaws.

The cylinders driving the grippers are supplied by a pre-existing cooling circuit of the machine. To this purpose, tang 32 has an axial duct 32a that is open to receive coolant from the spindle. Duct 32a is in fluid communication with the inside of hollow horizontal crossbar 34, the latter being open to the chamber 36a of hydraulic cylinder 36.

Hollow crossbar 34 is provided with a single-acting valve 44 that can be opened for a quick drainage of the coolant. Alternatively, the coolant could be drained e.g. through a gauged hole or by solenoid valves mounted on the machine.

The apparatus is arranged to receive pallets housing the workpieces to be machined from a dedicated conveyor belt ND, which is arranged to receive the workpieces from a feeding conveyor belt NP serving the machining line. Dedicated conveyor belt ND feeds a piece-collecting conveyor belt NR.

In the operation of the apparatus, four pieces are conveyed in front of the apparatus by said dedicated conveyor belt ND. Machining head 14 is driven to pick up the gripping tools 24, 26 from tool-holding drum 22 by spindles 16, 18. Machining head 14 is then driven to grip the workpieces from dedicated conveyor belt ND by means of the gripping tools, and to lay down the pieces onto workpiece-supporting table T. Afterwards, machining head 14 is driven to lay down the gripping tools 24, 26 on the tool-holding drum 22 and to pick up the machining tools 20, in order to perform a predetermined machining cycle upon the pieces. At the end of the cycle, machining head 14 is driven to lay down machining tools 20 onto tool-holding drum 22, and to clamp the gripping tools 24, 26 in order to pick up the machined pieces from the piece-holding table T and to lay them down onto dedicated conveyor belt ND. The latter conveys the pieces to the piece-collecting conveyor belt NR.

Figs. 6, 7 show an alternative embodiment of the invention that is similar to the above-described embodiment relative to the main structure of the apparatus, which will be not further disclosed. In such alternative embodiment, a gripping tool 46 comprising four grippers 48 connected to a horizontal crossbar 50, is supported on vertical guides 50 which are slidably mounted on machining head 114 under the control of an actuator 54. The opening/closing motion of the grippers is operated by conventional actuators used in this field to drive mechanical parts, e.g. electric or pneumatic actuators.

In the above arrangement, the grippers are permanently supported on the machining head during the machining cycle, and are guided by the machining head to convey workpieces from the loading area to the machining area and vice versa. Actuator 54 drives the grippers to their lower position to pick-up/lay-down the pieces. During the machining cycle, actuators 54 drives the grippers to their upper position so that they do not interfere with the machining area.

Two preferred embodiments of the invention have been disclosed herein, but of course many changes may be made by a person skilled in the art, depending on the requirements, within the scope of the inventive concept. In particular, though in the first embodiment the cooling circuit is suitably used to operate the grippers, the latter can be operated by electric means or independent devices. Moreover, the opening/closing motion of the grippers can be achieved by means of different devices, e.g. by linkages or the like. Of course, the number of grippers supported on the gripping tools can be varied depending on the number of spindles and workpieces to be simultaneously machined.

## Claims

1. A workpiece-machining apparatus comprising:
- a bedplate (12),
- a working table and a machining head (14) which are supported on the bedplate in mutually slidable relation along at least one horizontal direction (X, Y) and one vertical direction (Z), and
- at least one motorized spindle (16, 18) supported on the machining head (14),
**characterized in that** it also comprises a gripping tool (24, 26) provided with at least one gripper (28, 30) which is operated for opening/closing by driving means (36, 38) and is adapted to be driven by the machining head (14) to cyclically convey workpieces (P1, P2 and P3, P4) from a loading area to the working table, and from the working table to an unloading area.

2. The apparatus of claim 1, wherein said motorized spindle (16, 18) is equipped for automatically clamping a machining tool (20), **characterized in that** said gripping tool (24, 26), during the machining of a workpiece, is adapted to be stored in an resting area accessible by the spindle (16, 18) and is provided with a tang (32) in order to be clamped by the spindle (16, 18) and to be driven by the machining head (14) to convey workpieces (P1, P2 and P3, P4) from said loading area to said working table.

3. The apparatus of claim 1, **characterized in that** said gripping tool (24, 26) is permanently supported on the machining head (14) and is adapted to be driven by the machining head to convey workpieces (P1, P2 and P3, P4) from said loading area to said working table and vice versa.

4. The apparatus of claim 2 or 3, **characterised in that** said driving means comprise a hydraulic cylinder (36) supplied by a fluid-supply circuit and housing a slidable piston (38) to which said gripper is linked for opening/closing via coupling means (38a, 38b, 40).

5. The apparatus of claim 4, **characterised in that** said gripper comprises a pair of jaws (28a, 28b) which are mutually slidable at right angle to the axis of the cylinder for opening/closing, and **in that** said coupling means comprise a pair of guides (38a, 38b) which extend obliquely along the piston and are slidably engaged by respective slides (40) supported on respective jaws.

6. The apparatus of claim 4 or 5, also comprising a cooling circuit connected for supplying coolant to a machining tool via a supply duct that is open to the spindle, **characterized in that** said fluid-supply circuit is the cooling circuit of the apparatus, and **in that** an axial duct (32a) extending through the tang (32) is open to receive coolant from the supply duct and is in fluid communication with the hydraulic cylinder (36).

7. The apparatus of anyone of claims 1 to 6, **characterized in that** said gripping tool (24, 24) comprises two grippers (28, 30) supported on a crossbar (34).

8. The apparatus of claim 3, **characterized in that** said gripping tool (46) is movably supported on the machining head (114) and is driven by driving means (54) from a working position, such that the gripping tool has access to the pieces with the head positioned in said loading area, to a resting position, such that the gripping tool does not interfere with the machining area with the head positioned in the machining area, and vice versa.

9. The apparatus of claim 8, **characterised in that** said gripping tool (46) is slidably supported along a vertical direction on the machining head (114), said working position being a lower picking-up/laying-down position, and said resting position being an upper position such that the gripping tool does not interfere with the machining area.

10. The apparatus of claim 8 or 9, **characterised in that** said gripping tool (46) comprises four grippers (48).
